# EUROPEAN PATENT APPLICATION

(11) **EP 2 975 281 A2**
(43) Date of publication of application: **20.01.2016**
(21) Application number: 15168586.4
(22) Date of filing: 21.05.2015
(51) Int. Cl.: F16D 13/72

(54) **DRY-TYPE DUAL-CLUTCH COOLING STRUCTURE**

(30) Priority: 18.07.2014 JP 2014147559
(71) Applicant: Kono, Masakatsu, Hanyu-shi, Saitama 348-0071 (JP)
(72) Inventor: Kono, Masakatsu, Hanyu-shi, Saitama 348-0071 (JP)
(74) Representative: TBK

(57) **Abstract**

A dry-type dual-clutch cooling structure (100) includes: an intake port (123) and an exhaust port (124) provided in a clutch housing (121) in which a dual-clutch (120) is accommodated; a branch portion (105) provided in an air-suction path of an engine (110); a changeover valve (103) provided in the branch portion (105); and a connection pipe (128) for connecting the branch portion (105) and the exhaust port (124) to each other, characterized in that at least while a creep phenomenon is generated in a vehicle provided with the dual-clutch (120) by controlling the dual-clutch (120) in a half clutch state, the changeover valve (103) is changed over to suck air into the engine (110) from the connection pipe (128). The clutch housing (121) is cooled by this sucked air.

## Description

### BACKGROUND

### Technical Field

The present invention relates to a technical field of a clutch provided in a vehicle, and more particularly, to a technical field of a dual-clutch having two separate clutches for odd and even gear sets.

### Related Art

There conventionally exists an object to cool a clutch for managing temperature of the clutch, and there are a large number of inventions and devices for achieving the object.

For example, JP 64-46535 Y discloses a technique in which a clutch housing is provided with an intake port and an exhaust port, a surface of the clutch housing is provided with a blade, air is made to flow from the intake port to the exhaust port by air current generated by the blade when a clutch disk rotates, thereby cooling the clutch.

Further, JP 3-84430 Y discloses a technique in which there is provided a sensor for detecting temperature in a clutch housing, and when temperature in the clutch housing reaches a given temperature, air in the clutch housing is exchanged by a fan provided in the clutch housing, thereby cooling a clutch.

In the case of a dual-clutch type transmission having two separate clutches for odd and even gear sets, with developments of a technique for controlling the transmission, the dual-clutch type transmissions are widely provided in vehicles offered commercially on behalf of conventional torque converter type transmissions because transmitting efficiency of the dual-clutch type transmissions is high.

### SUMMARY

In the dual-clutch type transmission having two separate clutches for odd and even gear sets, there exist a "wet-type" transmission in which cooling oil is charged into a clutch housing and a "dry-type" transmission in which cooling oil is not charged into a clutch housing. In the case of the "wet-type" transmission, although it is relatively easy to suppress temperature rise of the clutch due to existence of the charged oil, the existence itself of the oil becomes resistance to rotation of the clutch, and energy loss is inevitably generated.

In the case of the "dry-type" transmission, since resistance caused by the oil is not received, this transmission is more preferable than the "wet-type" transmission in terms of the high transmitting efficiency. However, since it is not possible to sufficiently cool the clutch, a problem of reduction in a friction coefficient caused by temperature rise of a surface of the clutch disk and a problem of warpage of the clutch disk occur, and it is difficult to smoothly and efficiently control the transmission.

In the dual-clutch type transmission having two separate clutches for odd and even gear sets, a so-called "creep phenomenon" which is naturally generated in the conventional torque converter type transmission due to its structure is generated by half clutch control. Therefore, heat is most prone to be generated when the creep phenomenon is generated (especially when traffic jam occurs).

To solve this problem, according to a method of JP 64-46535 Y, rotation loss caused by the blade when an engine rotates at high speed becomes obvious, and when the engine rotation is not so high such as when traffic jam occurs where heat is most generated, there is a problem that air current caused by the blade can not sufficiently be obtained.

According to a method of JP 3-84430 Y, although it is surely relatively easy to cool the clutch, energy is separately consumed for driving the fan (more specifically, electricity of battery is consumed), and this runs counter to the desire to suppress energy consumption and to enhance fuel consumption even if only slightly.

Since heat becomes the largest problem when the vehicle can not run easily such as when traffic jam occurs, it is also difficult to cool the clutch using running wind.

Hence, it is an object of the present invention to efficiently cool a dry-type dual-clutch without largely consuming energy for separately cooling the clutch.

To achieve the above object, the present invention provides a dry-type dual-clutch cooling structure including: an intake port and an exhaust port provided in a clutch housing in which a dual-clutch is accommodated; a branch portion provided in an air-suction path of an engine; a changeover valve provided in the branch portion; and a connection pipe for connecting the branch portion and the exhaust port to each other, characterized in that at least while a creep phenomenon is generated in a vehicle provided with the dual-clutch by controlling the dual-clutch in a half clutch state, the changeover valve is changed over to suck air into the engine from the connection pipe.

In short, while the dual-clutch is exposed a thermally strict condition (e.g., condition that vehicle speed is not more than given speed, or when the number of rotations of engine is not more than given value, or when transmission gear range is first or second, or when vehicle runs at idle), the changeover valve is changed over to exchange air in the clutch housing and to cool the clutch utilizing a suction force of air which is naturally generated when the engine rotates.

For example, in the case of a vehicle of 1,000 cc displacement four-stroke engine, the number of rotations of the engine at the time of idling is generally about 800 rotations per minute. In the case of the four-stroke engine, air is sucked into each of cylinders once while a crankshaft rotates twice. This means that air of 400 L (1,000 cc x 800/2 = 400,000 cc) is sucked per minute. If the number of rotations of the engine is increased, a suction amount is also increased naturally. If such a large amount of air current exists, it is possible to absorb a large amount of heat by sending the air into the clutch housing.

The changeover valve is changed over to suck air from a connection pipe when the engine load is not so high. Therefore, even when suction temperature of the engine becomes slightly high when the clutch is cooled, this is a sufficiently controllable range, and this does not generate a problem for the engine.

In the present invention, intrinsically, air in the clutch housing is exchanged to cool the clutch while utilizing a suction force of air generated when the engine rotates. Hence, energy for cooling the clutch is not newly consumed (strictly speaking, energy for changing over the changeover valve and suction loss are generated because an air-suction path when changeover valve is changed over becomes complicated, but this is extremely small energy as compared with energy for separately electrically rotating a fan).

It is preferable that a first air filter is provided halfway down the connection pipe.

According to this configuration, it is possible to prevent solid matters (clutch lining dust and the like) from entering into the engine.

It is preferable that a second air filter is provided upstream of the intake port.

According to this configuration, it is possible to prevent solid matters (dust and the like) in atmosphere from entering into the clutch housing.

If the present invention is applied, it is possible to efficiently cool a dry-type dual-clutch when creep phenomenon is generated without largely consuming energy which is separately required for cooling the clutch.

### BRIEF DESCRIPTION OF DRAWINGS

FIG. 1 is a diagram showing a structure of a dry-type dual-clutch cooling structure according to the present invention;
FIG. 2 is a diagram showing a flow of sucked air when the dry-type dual-clutch cooling structure of the invention is not cooled; and
FIG. 3 is a diagram showing a flow of sucked air when the dry-type dual-clutch cooling structure of the invention is cooled.

### DETAILED DESCRIPTION

A dry-type dual-clutch cooling structure 100 which is one example of an embodiment of the present invention will be described below with reference to the accompanying drawings. To make it easy to understand the drawings, sizes of some members are shown in an exaggerated manner and the drawings do not necessarily correspond to the actual products. The drawings should be seen from directions of reference signs, and a vertical direction, a lateral direction, a near side and a deep side are expressed based on these directions.

### <Configuration of dry-type dual-clutch cooling structure>

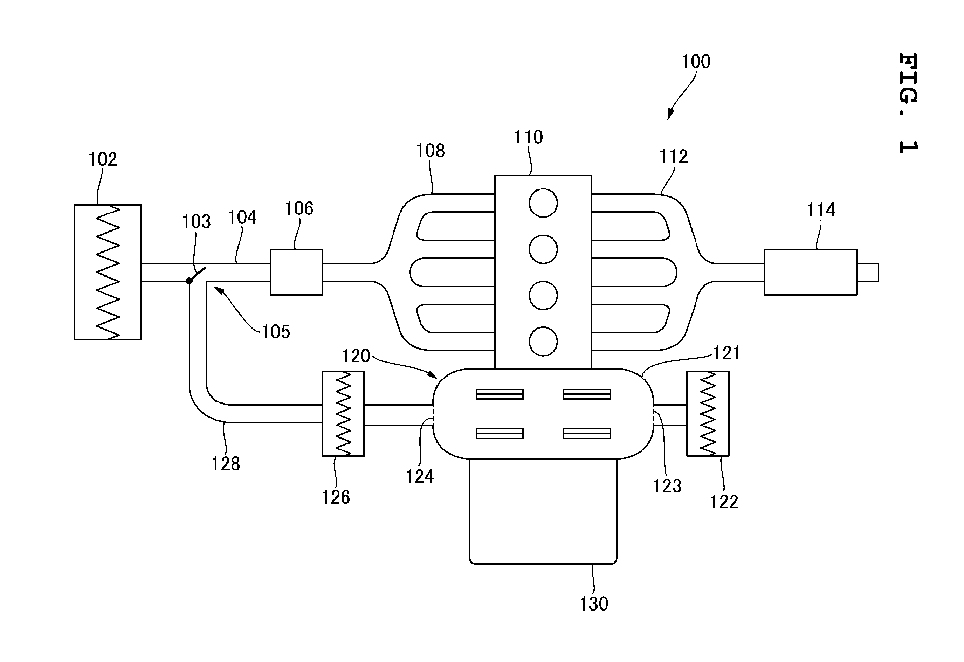

FIG. 1 shows the dry-type dual-clutch cooling structure 100 of the present invention. A reference sign 110 represents an engine, and a transmission 130 is mounted on the engine 110 through a dual-clutch 120.

An intake manifold 108 and an exhaust manifold 112 are mounted on the engine 110. A muffler 114 is provided downstream of the exhaust manifold 112.

A throttle valve 106 is provided upstream of the intake manifold 108, a main suction pipe 104 is provided further upstream of the intake manifold 108, and an air filter 102 is provided further upstream of the intake manifold 108. A flow from the air filter 102 → main suction pipe 104 → the throttle valve 106 → the intake manifold 108 is an "air-suction path" which is provided in a vehicle as a normal structure.

A branch portion 105 is provided halfway down the main suction pipe 104 (i.e., halfway down "air-suction path"), and the branch portion 105 includes a changeover valve 103. An auxiliary suction pipe (connection pipe) 128 is connected to the branch portion 105. An air filter (first air filter) 126 is provided halfway down the auxiliary suction pipe 128. Operation of the changeover valve 103 is controlled by an actuator (not shown).

An intake port 123 and an exhaust port 124 are formed in a clutch housing 121 of the dual-clutch 120. The auxiliary suction pipe 128 extending from the branch portion 105 is connected to the exhaust port 124. An air filter (second air filter) 122 is connected to the intake port 123.

### <Working and function of dry-type dual-clutch cooling structure>

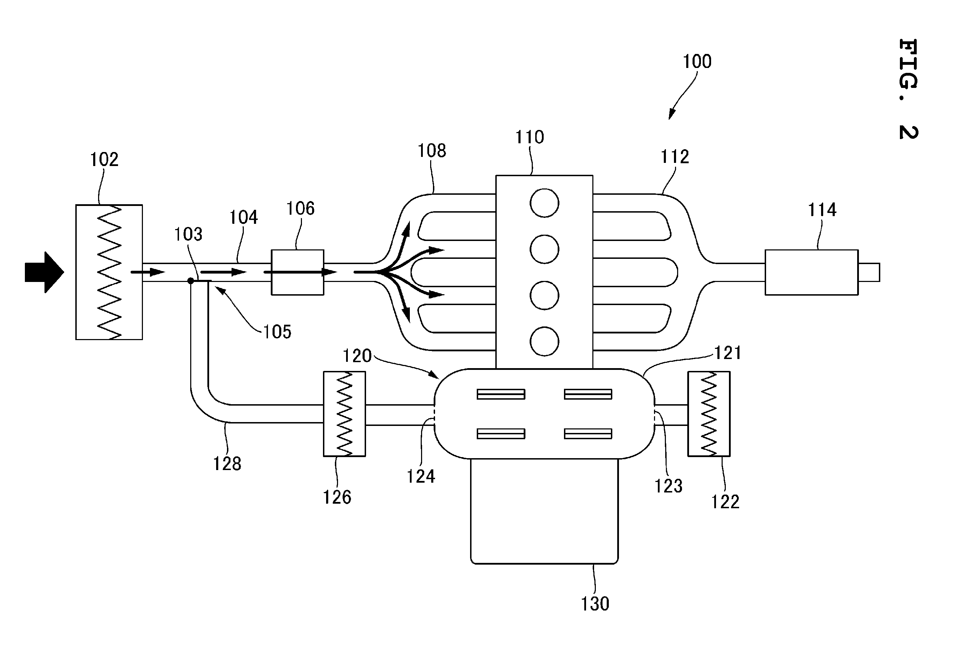

As shown in FIG. 2, the changeover valve 103 is normally located at a position for closing communication on the side of the auxiliary suction pipe 128, and the changeover valve 103 introduces outside air only from the air filter 102 and operates.

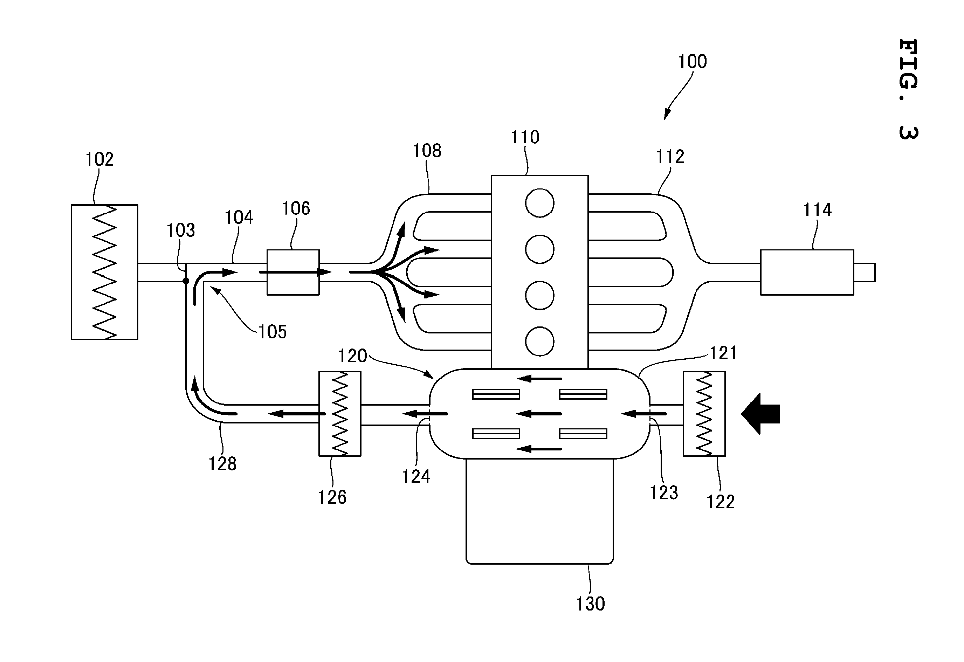

Only under a "given condition", the changeover valve 103 is changed over to open the communication on the side of the auxiliary suction pipe 128 as shown in FIG. 3, and operates to introduce outside air from the auxiliary suction pipe 128. At the same time, the changeover valve 103 stops the introduction of outside air from the air filter 102.

After the changeover valve 103 is changed over, the engine 110 takes in air through a path composed of the air filter 122 → the intake port 123 → the clutch housing 121 → the exhaust port 124 → the air filter 126 → the auxiliary suction pipe 128 → the branch portion 105 → the main suction pipe 104 → the throttle valve 106 → the intake manifold 108.

If the engine 110 is 1,000 cc displacement four-stroke engine and the number of rotations of the engine at the time of idling is 800 rotations per minute, an air amount sucked by the engine 110 at the time of idling is 400 L (1,000 cc x 800/2 = 400,000cc). If the minute is converted into seconds, about "6.7 L" amount of air flows through the clutch housing 121, and the dry-type dual-clutch accommodated in the clutch housing 121 is cooled by this air flow.

As this "given condition" under which the changeover valve 103 is changed over, various conditions can be utilized. For example, the following conditions can be used alone or in combination: generation of half clutch, vehicle speed, transmission gear range, the number of rotations of engine, outside air temperature, and temperature in the clutch housing 121.

The changeover valve 103 is changed over to suck air from the auxiliary suction pipe 128 is when a load of the engine 110 is not so high. Therefore, even if temperature of air sucked by the engine 110 when the clutch is cooled becomes slightly high, this is a sufficiently controllable range, and this does not generate a problem for the engine 110.

As described above, in the present invention, intrinsically, a suction force of air generated by rotation of the engine 110 is utilized, air in the clutch housing 121 is exchange and the clutch is cooled by this force. Hence, energy for cooling the clutch is not newly consumed (strictly speaking, energy for changing over the changeover valve 103 and suction loss are generated because the air-suction path when changeover valve 103 is changed over becomes complicated, but this is extremely small energy as compared with energy for separately electrically rotating the fan). As a result, it is possible to provide a dry-type dual-clutch transmission having further excellent fuel economy performance.

### <Example of other configuration>

Although the two air-suction paths are completely changed over by changing over the changeover valve 103 in the above description, it is also possible to "incompletely" change over the two air-suction paths. For example, even after the changeover valve 103 is changed over, it is possible to keep sucking a given amount of air without completely stopping the air suction from the air filter 102. It is also possible to employ such a configuration that air is always sucked from both the paths, and the air suction amounts from the paths are increased or reduced before and after the changeover valve 103 is changed over.

A dry-type dual-clutch cooling structure (100) includes: an intake port (123) and an exhaust port (124) provided in a clutch housing (121) in which a dual-clutch (120) is accommodated; a branch portion (105) provided in an air-suction path of an engine (110); a changeover valve (103) provided in the branch portion (105); and a connection pipe (128) for connecting the branch portion (105) and the exhaust port (124) to each other, characterized in that at least while a creep phenomenon is generated in a vehicle provided with the dual-clutch (120) by controlling the dual-clutch (120) in a half clutch state, the changeover valve (103) is changed over to suck air into the engine (110) from the connection pipe (128). The clutch housing (121) is cooled by this sucked air.

## Claims

1. A dry-type dual-clutch cooling structure (100) comprising:
an intake port (123) and an exhaust port (124) provided in a clutch housing (121) in which a dual-clutch (120) is accommodated;
a branch portion (105) provided in an air-suction path of an engine (110);
a changeover valve (103) provided in the branch portion (105); and
a connection pipe (128) for connecting the branch portion (105) and the exhaust port (124) to each other, **characterized in that**
at least while a creep phenomenon is generated in a vehicle provided with the dual-clutch (120) by controlling the dual-clutch (120) in a half clutch state, the changeover valve (103) is changed over to suck air into the engine (110) from the connection pipe (128).

2. The dry-type dual-clutch cooling structure (100) according to claim 1, **characterized in that** a first air filter (126) is provided halfway down the connection pipe (128).

3. The dry-type dual-clutch cooling structure (100) according to claim 1 or 2, **characterized in that** a second air filter (122) is provided upstream of the intake port (123).
